## Europäisches Patentamt
## European Patent Office
## Office européen des brevets

(19)

(11) Veröffentlichungsnummer: **0 128 972**
**A1**

(12) **EUROPÄISCHE PATENTANMELDUNG**

(21) Anmeldenummer: **83106194.0**

(22) Anmeldetag: **04.06.83**

(51) Int. Cl.³: **F 01 C 1/44**
**F 02 B 57/00**

(43) Veröffentlichungstag der Anmeldung:
**27.12.84** **Patentblatt 84/52**

(84) Benannte Vertragsstaaten:
**IT**

(71) Anmelder: **Rommel, Artur**
**Bahnhofstrasse 46**
**D-7052 Schwaikheim(DE)**

(72) Erfinder: **Rommel, Artur**
**Bahnhofstrasse 46**
**D-7052 Schwaikheim(DE)**

(54) **Rotierende Kolbenbrennkraftmaschine.**

(57) Rotierende Kolben (brenn) kraftmaschine mit in einem festen Gehäuse (1) umlaufenden Rotor (3) mit drei (Brenn) Kammern (2). Der Rotor ist fest verbunden mit der Achse (4) und kann durch die Tätigkeiten der in dem Rotor eingebauten Drehkolben (5) bewegt werden. – Der zentrale Hohlraum (6) des Rotors (3) ist als dynamische Ladepumpe ausgeführt.

Mit der "DREIDIAGONALEN HEBTECHNIK" ist im Kreisumgang die Anhebung zur

Verdichtung
Verbrennung – Expansion
Schubleistung

fließend stoßfrei, –

Umdrehungen mit möglicher Überschreitung der Grenzwerte der Rollenlager.

Während einer Umdrehung erfolgen neun Verdichtungen, – bei Verbrennungstriebwerken neun Zündungen.

Formel der neuen Hebetechnik:

Fliehkräfte mit Schwerkraft der Schwungmasse – für Gewinnung von ENERGIEN – dienstbar machen!

./...

Rotor 2000

Verdichter

Hebetechnik „Dreidiagonal im Kreis" je 720°
Mai 83 Rommel.

- 1 -

Erweiterungen zu eigenen "OFFENLEGUNGSSCHRIFTEN"

1) Offenlegungsschrift DE 26 45 001 (20.08.77)
   mit Protokoll des DPA Kl F o 1C (26.04.78)

2) PCT Jntern.Veröffentlichung WO 80/01397
   PCT EP 79/00092 (Anmeldung (80 9000-13.6)

ROTOR  Rotierende Kolbenbrennkraftmaschine

a) Verdichtung (Alle mögl.Verdichtungsagrigate)

b) Verbrennungstriebwerke
   (Verdichtung,Verbrennung, Expansion)

Mit der Zeit und mit praktischen Versuchen wurden weitere Jdeen - Verbesserungen und Erweiterungen - sichtbar, welche, laut Prüfungsbericht, über den Stand obiger Offenlegungsschriften hinausgehen.

Das Wesentliche der Verbesserungen ist die Hebetechnik im Kreisumgang (siehe Patentzeichng.)

In oben angeführten Offenlegungsschriften ist die Hebetechnik der Höchstwert im Winkel $38^O$ Aufw.$19^o$ Abw.$19^o$.
Anhebung der Lager(10) mit Drehkolben (5) durch

a) Gleitlagerschine ( 8,9 )
b) Zwangsgesteuerte Gleitlager (16,17,18,19)

Die verbesserte Hebetechnik:

c) Rollenlager (Nockenrollen) -30.12.80 nachger.)

Anhebung der Lager mit Drehkolben (10,5)

"DREIDIAGONAL" mit je $120^O$ im Kreisumgang.

Schnittpunkt Kreisumgang im Winkel von $80^o$ - $40^o$ Aufwärts / $40^o$ Abwärts -

Mit $120^O$ ist der Kreisumgang der Lager mit Drehkolben fließend stoßfrei, mit unbegrenzten Werten für die Rollenlager bis zum Grenzbereich der Umdrehungen der Nockenrollen.

Außerdem entfällt das Kippen der Drehkolben im Kreisumgang.

Rommel.

0128972

Zitat:

Galilei  - Erde als Kugel -

Einstein - Relativitätslehre -

Rommel - Lehre für Hebetechnik "DREIDIAGONAL" je 120° im Kreisumgang.

- Fliekräfte mit Schwungmasse für Gewinnung von ENERGIEN dienstbar machen -

Als Verdichter jeglicher Art; sowohl auch als für Verbrennungstriebwerke.

Bei Verbrennungstriebwerke ist durch den viertakt ( Ansaugen, Verdichten, Expansion, Auslässe ) für den "ROTOR" eine Begrenzung (Verengung) des Hubraums der Brennkammer erforderlich. Werte von ca 40° im Winkel um genügend Weg zur Funktion für drei Brennkammern im Kreisumgang frei zu halten.

Die Einengung erfolgt durch die Gelenkdichtungen (a,b) mit Veriegelung und Feder.

Die Gelenkdichtungen (a,b) steuern die Funktionen der Verdichtung, Ein - und Auslässe, sowie Schubleistung.

Jm Bereich Gelnkdichtung(a) ist die Einspritzung außerhalb der Brennkammer möglich.

Jm Bereich Gelenkdichtung(b) sind die Auslässe eingebunden.

Mit Gelenkdichtung(a) ist zugleich eine Verengung zwecks höherer Verdichtung vorhanden.

Prototyp als Verdichter mit Funktionen vorhanden.
Prototyp als Verbrennungstriebwerk ("ROTOR"  ist im Auftrag.)

Die neue Hebtechnik ist in der Patentzeichnung deutlich erkennbar.

Rommel.

ANSPRÜCHE

1. Rotierende Kolbenbrennkraftmaschine mit in einem festen Gehäuse (1) umlaufenden Rotor (3), mit drei Brennkammern (2). Der Rotor ist fest verbunden mit der Achse (4) und kann durch die Tätigkeit der in dem Rotor eingebauten Drehkolben (5) bewegt werden.

Der zentrale Hohlraum (6) des Rotors (3) ist als dynamische Ladepumpe ausgeführt.

Während einer Umdrehung des Rotors erfolgen neun Zündungen.

"HEBETECHNIK" Dreidiagonal je 120$^{\circ}$ im Kreis.

Der Schnittpunkt zur Anhebung ist im Bereich von 80$^{\circ}$ im Winkel (Aufwärts 40$^{\circ}$ Abwärts 40$^{\circ}$)

Umdrehungen im Kreis fließend stoßfrei für die Rollenlager, mit möglicher Überschreitung der Umdrehungen der Nockenrollen.

Die Steurung der Ein - und Auslässe erfolgt durch die Gelenkdichtungen ( a,b).

2. Rotor nach Anspruch 1 dadurch gekennzeichnet,daß die "Besondere Hebetechnik"

Rollenlager mit Nockenrollen (Entwurf 30.12.80.) durch Anhebung der Lager(10) mit Drehkolben(5) über die verbesserte Gelenksperre (14) mit zwei festen Lagern (d.h. idiotensicher) im Kreisumgang Verdichtung, Expansion, Schubleistung kreisrund möglich macht.

3. Rotor nach Anspruch 1 und 2 dadurch gekennzeichnet, daß durch die

"Dynamische Ladepumpe" der Wärmetausch innerhalb des Rotors stattfindet.

Einmaliger Vorgang ! Dienstbarmachung der Abwärme der Brennkammer als Rückführung zur Verdichtung.

4. Rotor nach Anspruch 3 dadurch gekennzeinet, daß die neue Lehre der Hebetechnik

Fliehkräfte mit Schwungmasse für Gewinnung für ENERGIEN dienstbar zu machen.

Rommel.

Rotor 2000 —1/2— PCT/EP 83 00236.

Verdichter

Hebetechnik „Dreidiagonal im kreis" je 720°

Mai 83  Rommel.

PCT EP 79/00092

ROTOR 2000

-2/2-

PCT/EP·8.3·/00236.

83106194.0

0128972

Verdichtung
Verbrennung
Expansion

(0/80 Schnittpunkt)

80/0°

Mai 83

Rommel.

Hebetechnik „3 diagonal im Kreis je 720°"
Rollenlager (grenzwert der Umdrehungen)

0128972

**EUROPÄISCHER RECHERCHENBERICHT**

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | WO-A-7 900 985  (ROMMEL) * Insgesamt * | 1-4 | F 01 C    1/44 F 02 B   57/00 |
| X | DE-A-2 645 001  (ROMMEL) * Insgesamt * | 1-4 | |
| A | FR-A-  492 719  (GEORGE) * Seite 1, Zeilen 1-37 * | 1-3 | |
| A | US-A-3 960 116  (INGHAM) * Spalte 1, Zeilen 1-70 * | 1 | |

| RECHERCHIERTE SACHGEBIETE (Int. Cl. ³) |
|---|
| F 01 C F 02 B |

Der vorliegende Recherchenbericht wurde für alle Patentansprüche erstellt.

| Recherchenort | Abschlußdatum der Recherche | Prüfer |
|---|---|---|
| DEN HAAG | 25-01-1984 | WASSENAAR G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

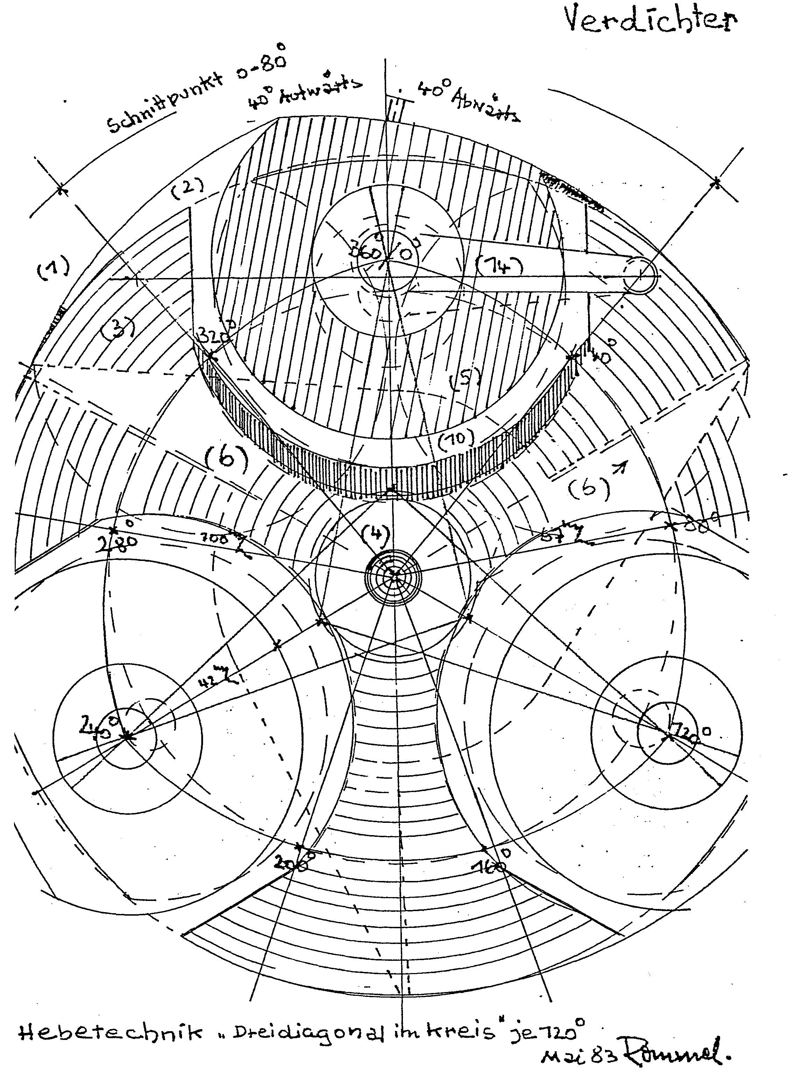

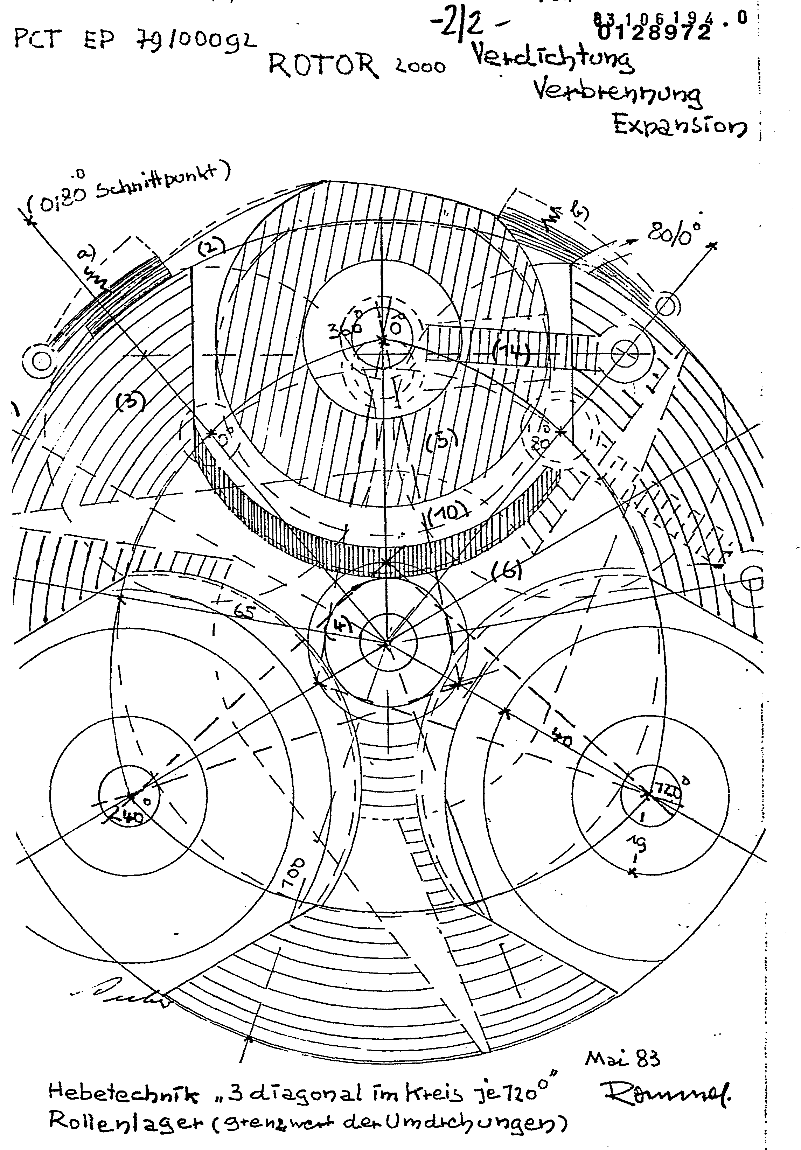

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument